# EUROPÄISCHE PATENTSCHRIFT

(11) **EP 3 112 747 B1**
(45) Veröffentlichungstag und Bekanntmachung des Hinweises auf die Patenterteilung: **23.05.2018**
(21) Anmeldenummer: 16176594.6
(22) Anmeldetag: 28.06.2016
(51) Int. Cl.: F21V 7/00, F21V 5/04, F21V 5/00, G02B 17/08, G02B 19/00, F21Y 101/00, F21Y 103/10, F21Y 115/10

(54) **OPTISCHES ELEMENT ZUR BEEINFLUSSUNG DER LICHTABGABE EINER LÄNGLICHEN LICHTQUELLE**
OPTICAL ELEMENT FOR INFLUENCING THE LIGHT EMITTED BY AN EXTENDED ILLUMINATION SOURCE
ÉLEMENT OPTIQUE DESTINE A INFLUENCER L'EMISSION LUMINEUSE D'UNE SOURCE LUMINEUSE ALLONGEE

(30) Priorität: 02.07.2015 DE 202015103490 U
(43) Veröffentlichungstag der Anmeldung: 04.01.2017
(73) Patentinhaber: Zumtobel Lighting GmbH, 32657 Lemgo (DE)
(72) Erfinder: Dünschede, Elmar, 33100 Paderborn (DE); von Kloeden, Burkhard, 32760 Detmold (DE)
(74) Vertreter: Thun, Clemens

(56) Entgegenhaltungen:
- DE-A1-102013 226 970
- DE-U1-202010 015 305
- US-A1- 2010 142 200
- US-B1- 8 576 406

## Beschreibung

Die vorliegende Erfindung betrifft ein optisches Element, welches zur Beeinflussung der Lichtabgabe einer länglichen Lichtquelle vorgesehen ist, wobei es sich bei der länglichen Lichtquelle insbesondere um eine längliche LED-Platine handelt. Gemäß einem bevorzugten Anwendungsbeispiel soll dabei das optische Element in einem sog. Wallwasher zur Flächenbeleuchtung genutzt werden.

Unter einem Wallwasher versteht man eine Leuchte, die üblicherweise an der Decke bzw. in der Nähe der Decke eines Raums angeordnet ist und Licht derart nach unten seitlich abgibt, dass ein Bereich einer schräg unterhalb der Leuchte befindlichen vertikalen Wand möglichst gleichmäßig ausgeleuchtet wird. Die Lichtabgabe erfolgt also im Gegensatz zu klassischen Leuchten, die bspw. für das Beleuchten von Arbeitsplätzen oder dergleichen verantwortlich sind, nicht primär senkrecht und insbesondere symmetrisch nach unten hin, sondern stattdessen asymmetrisch zur Seite, um die Wand beleuchten zu können.

Derzeit aus dem Stand der Technik bekannte Wallwasher, die auf der Nutzung von LED-Lichtquellen basieren, sind üblicherweise derart ausgestaltet, dass lineare LED-Platinen als Lichtquelle dienen und diesen LED-Platinen ein optisches System bestehend aus einem mechanisch geformten Rinnenreflektor zugeordnet ist. Dieser Rinnenreflektor, der bspw. durch ein gerolltes oder auch tief gezogenes Aluminiumblech gebildet sein kann, weist dann eine spezielle Querschnittform auf, die zu der gewünschten flächigen Lichtverteilung an der zu beleuchtenden Wand führt. Weiterhin ist bspw. aus der WO 2013/060527 A1 bekannt, speziell gestaltete lineare Lichtleitelemente zu nutzen, die wiederum die erforderliche asymmetrische Lichtverteilung erzielen.

Die aus dem Stand der Technik bekannten Technologien zeichnen sich allerdings dadurch aus, dass sie zu relativ großbauenden optischen Systemen führen und die verhältnismäßig großen auftretenden Toleranzen insbesondere bei der Herstellung der Reflektoren die Reproduzierbarkeit der Lichtverteilung negativ beeinträchtigen. Weiterhin zeichnet sich das aus der oben erwähnten WO 2013/060527 A1 bekannte Lichtleitelement durch eine äußerst komplexe Querschnittform aus, die wenig Gestaltungsspielraum hinsichtlich der letztendlich zu erzielenden Lichtverteilung lässt.

Weitere optische Elemente zur Beeinflussung der Lichtangabe linearer Lichtquellen sind aus der DE 20 2010 015 305 U1, DE 10 2013 226970 A1, US 2010/142200 A1 oder US 8,576,406 B1 bekannt. Mittels spezieller Gestaltungen der lichtbrechenden Flächen soll hierbei eine bestimmte Lichtabstrahlcharakteristik erzielt werden.

Der vorliegenden Erfindung liegt deshalb die Aufgabenstellung zugrunde, ein neuartiges optisches Element zur Verfügung zu stellen, welches zur Beeinflussung der Lichtabgabe einer länglichen Lichtquelle genutzt werden kann, insbesondere um eine zur Nutzung in einem Wallwasher erforderliche Lichtverteilung zur Verfügung zu stellen. Dabei sollten idealerweise Toleranzen bei der Herstellung des optischen Elements möglichst reduziert werden und das insgesamt hierdurch gebildete optische System eine möglichst geringe Baugröße aufweisen.

Die Aufgabe wird durch ein optisches Element, welches die Merkmale des Anspruchs 1 aufweist, gelöst. Vorteilhafte Weiterbildungen der Erfindung sind Gegenstand der abhängigen Ansprüche.

Das erfindungsgemäße optische Element ist länglich ausgebildet und weist im Querschnitt eine etwa trapezartige Form auf. Hierbei ist ein der Lichtquelle zugewandter Lichteintrittsbereich vorgesehen, der eine Ausnehmung mit einer gekrümmten Bodenfläche aufweist, eine dem Lichteintrittsbereich gegenüberliegende Lichtabstrahlfläche, welche eine gekrümmte Grundform aufweist, der linsenartige Freiformoptiken überlagert sind, sowie zwei sich von dem Lichteintrittsbereich zu der Lichtabstrahlfläche erstreckende, ebenfalls gekrümmte Seitenflächen. Die Bodenfläche, die Grundform der Lichtabstrahlfläche und die beiden Seitenflächen sind hierbei jeweils konvex gekrümmt, wobei die Bodenfläche, die Grundform der Lichtabstrahlfläche und die beiden Seitenflächen jeweils Kurven folgen, die durch Polynome dritter oder höherer Ordnung beschreibbar sind. Es hat sich herausgestellt, dass durch diese Gestaltung des optischen Elements insbesondere unter Nutzung der oben erwähnten Freiformoptiken eine sehr gute Kontrolle des abgegebenen Lichts erzielt werden kann und damit eine Lichtverteilungskurve erreichbar ist, die sich ideal für die Nutzung in einem Wallwasher eignet.

Erfindungsgemäß wird also ein optisches Element zur Beeinflussung der Lichtabgabe einer länglichen Lichtquelle, insbesondere einer länglichen LED-Platine vorgeschlagen, wobei das optische Element sich in einer Längsrichtung erstreckt und im Querschnitt etwa trapezartig ausgebildet ist mit
- einem der Lichtquelle zugewandten Lichteintrittsbereich, der eine Ausnehmung mit einer gekrümmten Bodenfläche aufweist,
- einer dem Lichteintrittsbereich gegenüberliegenden Lichtabstrahlfläche, welche eine gekrümmte Grundform aufweist, der linsenartige Freiformoptiken überlagert sind, sowie
- zwei sich von dem Lichteintrittsbereich zu der Lichtabstrahlfläche erstreckenden, ebenfalls gekrümmten Seitenflächen,
wobei die Bodenfläche, die Grundform der Lichtabstrahlfläche und die beiden Seitenflächen jeweils konvex gekrümmt sind und wobei die Bodenfläche, die Grundform der Lichtabstrahlfläche und die beiden Seitenflächen jeweils Kurven folgen, die durch Polynome dritter oder höherer Ordnung beschreibbar sind.

Insbesondere hat sich gezeigt, dass die vier Kurven, welche die Krümmung der angesprochenen Flächen beschreiben, durch vier spezielle Funktionen beschreibbar sind, welche nachfolgend noch näher definiert werden. Gegenüber einfacheren parabolischen Kurven kann mit Hilfe dieser speziellen Formen eine deutlich bessere Kontrolle des abgegebenen Lichts erzielt werden.

Die durch diese Kurven definierten vier Flächen sorgen dabei zunächst für eine Grundlichtverteilung des optischen Elements, also für eine sog. Vorkollimierung. des Lichts. Basierend auf dieser Grundlichtverteilung wird dann gemäß der vorliegenden Erfindung mit Hilfe einer sog. Freiformkissenoptik, also mit einer Vielzahl von linsenartigen Freiformoptiken, die der Grundform der Lichtabstrahlfläche überlagert sind, die finale asymmetrische Lichtverteilung erzielt. Die linsenartigen Freiformoptiken sind dabei vorzugsweise matrixartig auf der Lichtaustrittsfläche angeordnet und können insbesondere jeweils konvex gewölbt ausgeführt sein, wobei die Wölbung dann durch zwei aufeinander senkrecht stehende sog. Führungskurven beschreibbar ist. Eine erste Führungskurve ist dabei insbesondere in Längsrichtung des optischen Elements ausgerichtet, während hingegen die zweite Führungskurve senkrecht hierzu ausgerichtet ist. Diese zwei Führungskurven können dann je nach Wunsch angepasst werden, um die finale Lichtverteilung an die gewünschten Gegebenheiten anzupassen. Sowohl hinsichtlich der Form der Führungskurven als auch der Größe der linsenartigen Freiformoptiken bestehen dabei unterschiedlichste Wahlmöglichkeiten, sodass letztendlich sehr effektiv Einfluss auf die Lichtabgabe genommen werden kann, um eine optimale Flächenbeleuchtung zu erzielen. Dabei kann vorgesehen sein, dass die ersten Führungskurven, die - wie oben erwähnt - sich in Längsrichtung des optischen Elements erstrecken, für alle linsenartigen Freiformoptiken im Wesentlichen identisch sind, während hingegen die zweiten Führungskurven einer Variation unterliegen. Abgesehen von diesen linsenartigen Freiformoptiken ist dabei vorzugsweise vorgesehen, dass das erfindungsgemäße optische Element in Längsrichtung einen im Wesentlichen unveränderten Querschnitt aufweist.

Das optische Element selbst kann aus jedem lichtbrechenden Material gebildet sein, welches eine Herstellung in der gewünschten Form ermöglicht. Als vorteilhaft haben sich hierbei Glas, PMMA (Polymethylmethacrylat), PC (Polycarbonat) oder Silikon herausgestellt.

Gemäß der Erfindung wird ferner auch eine Leuchte vorgeschlagen, insbesondere ein Wallwasher, welche ein optisches Element entsprechend den obigen Ausführungen sowie eine dem optischen Element zugeordnete längliche Lichtquelle aufweist, wobei besonders bevorzugt die Lichtquelle durch eine oder mehrerer LED-Platinen gebildet ist. Letztendlich kann mit Hilfe der Erfindung eine sehr kompakte Bauform der für die Lichterzeugung und Lichtabgabe verantwortlichen Komponenten erzielt werden.

Nachfolgend soll die Erfindung anhand der beiliegenden Zeichnung näher erläutert werden. Es zeigen:
- Figur 1: die schematische Darstellung eines Wallwashers, der zur Beleuchtung einer schräg unterhalb davon befindlichen vertikalen Fläche vorgesehen ist;
- Figur 2: eine perspektivische Ansicht des erfindungsgemäßen optischen Elements;
- Figur 3: einen Querschnitt des optischen Elements zur Verdeutlichung der erfindungsgemäßen Form und
- Figur 4: in vergrößerter Ansicht die Lichtabstrahlfläche des optischen Elements mit den darauf angeordneten Freiformoptiken.

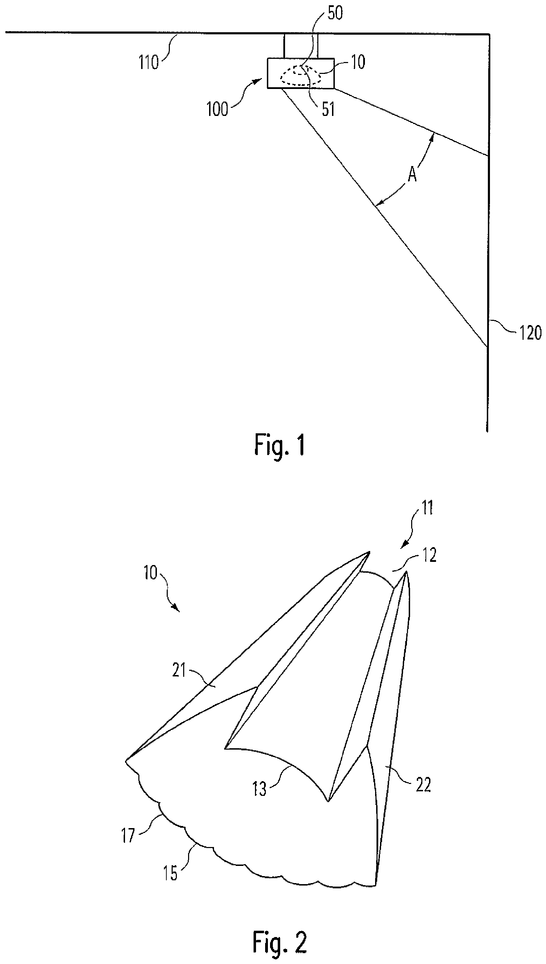

Figur 1 zeigt zunächst schematisch einen allgemein mit dem Bezugszeichen 100 versehenen Wallwasher, bei dem das erfindungsgemäße optische Element zum Einsatz kommt, um die bei derartigen Beleuchtungssituationen auftretenden Probleme zu verdeutlichen.

Der länglich ausgeführte Wallwasher 100 ist hierbei in unmittelbarer Nähe der Decke 110 eines Raums angeordnet, wobei er in gleicher Weise auch unmittelbar an der Decke 110 anliegend oder sogar als Einbauleuchte, also in der Decke 110 zumindest teilweise versenkt ausgeführt sein könnte. Wesentlich ist, dass mit Hilfe des Wallwashers 100 nicht ein senkrecht unterhalb der Leuchte 100 liegender Bereich beleuchtet werden soll, sondern stattdessen ein schräg unterhalb des Wallwashers 100 befindlicher Bereich einer vertikalen Wand 120. Üblicherweise sind also derartige Wallwasher 100 eher in seitlichen Bereichen von Räumen, also in der Nähe von Wänden an der Decke des jeweiligen Raums angeordnet und sollen dafür sorgen, dass die angerenzende bzw. benachbarte Wand in einer gewissen Helligkeit erscheint. Dies kann bspw. dazu dienen, um an der Wand befindliche Objekte wie bspw. Bilder oder dergleichen zu beleuchten. Auch eine indirekte Beleuchtung des Raums kann auf diese Weise erzielt werden.

Die Darstellung in Figur 1 verdeutlicht unmittelbar, dass also die Leuchte 100 nicht symmetrisch Licht zur Unterseite hin abgeben sollte, sondern stattdessen derart ausgeführt sein muss, dass das letztendlich abgegebene Strahlenbündel A auf den sich seitlich unterhalb befindenden Bereich der Wand 120 trifft. Dementsprechend muss also das optische System der Leuchte 100 derart ausgeführt sein, dass eine sog. asymmetrische Lichtverteilungskurve erzielt wird. In Längsrichtung der Leuchte 100 hingegen kann durchaus eine symmetrische Lichtabgabe vorliegen, durch die idealerweise erreicht wird, dass der an der Wand 120 beleuchtete Bereich eine größere Ausdehnung als die Leuchte 100 selbst aufweist.

Die erforderliche asymmetrische Lichtverteilung kann allerdings nicht in einfacher Weise dadurch erzielt werden, dass das optische System, welches üblicherweise eine symmetrische Lichtabgabe bewirkt, einfach verkippt angeordnet wird. Da - wie die schematische Darstellung in Figur 1 zeigt - die Abstände zwischen der Leuchte 100 und dem an der Wand 120 beleuchteten Bereich an dessen Oberseite und dessen Unterseite stark unterschiedlich sind, hätte ein einfaches Verkippen des optischen Systems zur Folge, dass der beleuchtete Bereich unterschiedlich hell erscheint, insbesondere in seinem oberen Bereich deutlich heller ist als in seinem unteren Bereich. Dementsprechend ist für eine zufriedenstellende Beleuchtung der Wand ein deutlich komplexeres optisches System erforderlich, welches - wie eingangs erläutert - bislang nur mit einem verhältnismäßig hohem Aufwand, großen Abmessungen und geringer Reproduzierbarkeit hinsichtlich der Lichtabgabe realisiert werden konnte. Diese Nachteile werden mit Verwendung des erfindungsgemäßen, nunmehr näher erläuterten optischen Elements vermieden.

In Figur 1 ist dabei schematisch dargestellt, in welcher Weise die Lichterzeugung und Lichtabgabe bei dem erfindungsgemäßen Wallwasher 100 erfolgt. Als Lichtquelle kommt dabei insbesondere eine Lichtquelle auf LED-Basis zum Einsatz, die durch eine oder mehrere in Längsrichtung der Leuchte 100 hintereinander angeordnete LED-Platinen 50 gebildet sein kann. Der Lichtquelle 50 vorgeordnet ist dann das erfindungsgemäße, mit dem Bezugszeichen 10 versehene optische Element, welches in perspektivischer Ansicht in Figur 2 gezeigt ist. Mit Ausnahme der später noch näher beschriebenen Freiformoptiken weist dabei das erfindungsgemäße optische Element 10 über seine Länge hinweg einen im Wesentlichen unveränderlichen Querschnitt auf. Dieser ähnelt dabei etwa einer trapezartigen Form, wobei zunächst an der der - in Figur 2 nicht dargestellten - Lichtquelle zugewandten Seite, welche den Lichteintrittsbereich 11 des optischen Elements 10 bildet, eine Ausnehmung 12 vorgesehen ist, die eine gekrümmte Bodenfläche 13 aufweist. Wie der Darstellung von Figur 1 entnommen werden kann, ist dabei das optische Element 10 in Bezug auf die LED-Platinen 50 derart angeordnet, dass sich die LEDs 51 unmittelbar in Nähe dieser Ausnehmung 12 befinden, idealerweise zumindest teilweise sogar in diese Ausnehmung 12 hineinragen.

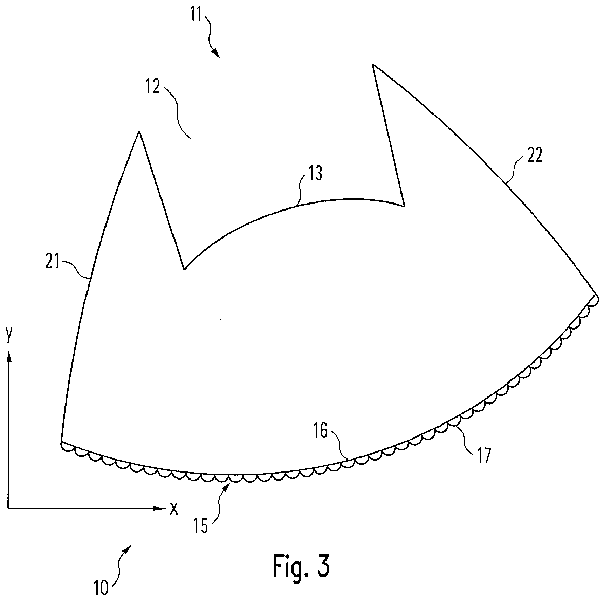

Die Lichtabgabe erfolgt über die dem Lichteintrittsbereich 11 gegenüberliegende Lichtabstrahlfläche 15, welche eine gekrümmte Grundform aufweist, der die linsenartigen Freiformoptiken 17 überlagert sind. Die gekrümmte Grundform kann der Schnittdarstellung des optischen Elements in Figur 3 entnommen werden und ist hier mit dem Bezugszeichen 16 versehen. Zwei Seitenflächen 21 und 22 schließlich erstrecken sich von dem Lichteintrittsbereich 11 zur Lichtabstrahlfläche 15 hin und bilden hierbei die bereits oben erwähnte trapezartige Grundform des optischen Elements 10. Diese besteht aus einem lichtdurchlässigen, brechenden Material wie zum Beispiel Glas, PMMA, PC oder Silikon.

Abgesehen von den Freiformoptiken sind optische Elemente zur Beeinflussung des Lichts von LEDs mit einer derartigen Querschnittsform bereits bekannt. Die Wirkungsweise derartiger Optiken beruht dabei darauf, dass ein Teil des von den LEDs abgegebenen Lichts lediglich durch Brechung beeinflusst wird und ein anderer Teil einmal totalreflektiert wird. Bei dem durch Brechung beeinflussten Licht handelt es sich um dasjenige, welches im Wesentlichen direkt von den LEDs nach vorne hin, also im vorliegenden Fall auf die gekrümmte Bodenfläche 13 der Ausnehmung 12 abgegeben wird. Beim Übergang in das optische Element 10 findet dabei eine erste Brechung statt, wobei das Licht dann auf direktem Weg auf die Lichtaustrittsfläche 15 trifft und hier wiederum durch Brechung beeinflusst wird. Licht hingegen, welches von den LEDs unter sehr flachen Winkeln seitlich abgegeben wird, tritt über die Seitenflächen der Ausnehmung 12 in das optische Element 10 ein und trifft dann von innen her auf die Seitenflächen 21 und 22. Die Form ist hierbei derart gewählt, dass das Licht an den Seitenflächen 21 und 22 totalreflektiert wird, derart, dass es wiederum auf die Lichtaustrittsfläche 15 trifft und dann das optische Element 10 verlässt. Eine derartige Grundform für LED-Optiken hat sich als vorteilhaft herausgestellt, da hierdurch das nahezu gesamte von LEDs abgegebene Licht, welches üblicherweise in einen sehr großen Winkelbereich von den LEDs abgegeben wird, für die eigentliche Lichtabgabe genutzt werden kann.

Im Gegensatz zu diesen bereits bekannten LED-Optiken zeichnet sich allerdings das erfindungsgemäße optische Element 10 durch die zusätzliche Verwendung der Freiformoptiken 17 an der Lichtaustrittsfläche 15 sowie eine spezielle Ausgestaltung der verschiedenen Flächen aus. Dies soll nachfolgend näher anhand der Querschnittdarstellung von Figur 3 erläutert werden.

Erkennbar ist hierbei zunächst, dass alle vier wesentlichen Flächen, also die Bodenfläche 13 der Ausnehmung 12, die Grundform 16 der Lichtabstrahlfläche 15 sowie die beiden Seitenflächen 21 und 22 konvex gekrümmt sind. Die Krümmungen folgen dabei jeweils Kurven, die insbesondere durch die vier nachfolgenden Gleichungen beschrieben werden können:
für die Seitenfläche 21: y = A₁x³ + B₁x² + C₁x + D₁
für die Bodenfläche 13: y = A₂x³ - B₂x² + C₂x + D₂
für die Seitenfläche 22: y = A₃x³ - B₃x² - C₃x + D₃
für die Grundform 16: y = A₄x³ + B₄x² + C₄x - D₄

Die Variablen x und y erstrecken sich hierbei wie in Figur 3 gezeigt in horizontaler bzw. vertikaler Richtung, wobei die obigen Gleichungen den Verlauf der entsprechenden Kurven bzw. der zugehörigen Flächen im Montagezustand beschreiben. Hierbei gilt für die Parameter Aₙ, Bₙ, Cₙ und Dₙ, dass sie ungleich 0 sein müssen.

Es wären auch Kurven noch höherer Ordnung denkbar, die oben dargestellten Gleichungen stellen jedoch die einfachste Möglichkeit dar, den Verlauf der vier Flächen zu beschreiben. Erkennbar ist also, dass alle vier Kurven des optischen Elements 10, welche für die Gestaltung der Grundlichtverteilung verantwortlich sind, durch Polynome mindestens dritten Grades beschrieben werden. Es hat sich in der Tat herausgestellt, dass parabolische Kurven, also Kurven lediglich zweiter Ordnung nicht geeignet sind, um die für den vorliegenden Anwendungsfall erforderliche Lichtverteilung zum gleichmäßigen Beleuchten der Wand zu erzielen.

Erkennbar ist auch, dass die Seitenflächen 21 und 22 des optischen Elements 10 unterschiedliche Krümmungen aufweisen, was zum Erzielen der erforderlichen asymmetrischen Lichtverteilung beiträgt.

Diese vier Flächen sorgen allerdings -wie bereits erwähnt - zunächst lediglich für eine Grundlichtverteilung, wobei dann basierend auf dieser Grundlichtverteilung mit Hilfe der Freiformoptiken 17 die finale asymmetrische Lichtverteilung erzielt wird.

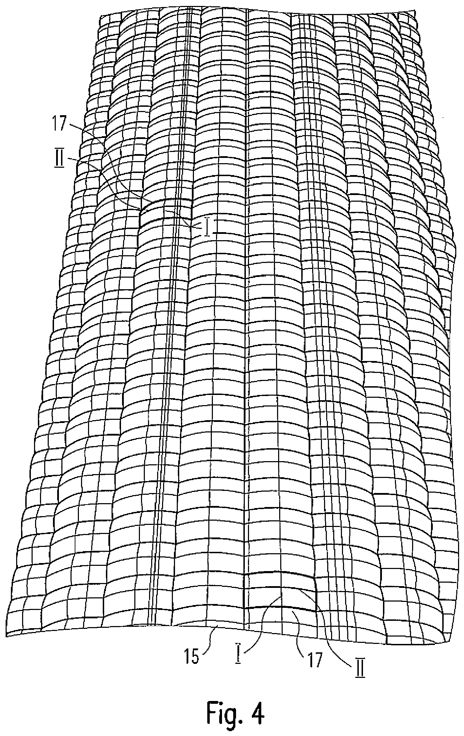

Figur 4 zeigt hierbei in vergrößerter Darstellung, die Unterseite des optischen Elements 10, also die Lichtaustrittsfläche 15. Erkennbar ist hierbei, dass die kissenartigen Freiformoptiken 17 matrixartig verteilt an der Lichtaustrittsfläche 15 des optischen Elements 10 angeordnet sind. Jede Freiformoptik 17 wird hierbei durch zwei sog. Führungskurven definiert, welche schematisch für zwei Freiformoptiken 17 dargestellt sind. Eine erste Führungskurve I erstreckt sich hierbei in Längsrichtung des optischen Elements 10, die zweite Führungskurve II ist senkrecht hierzu ausgerichtet. Grundsätzlich sind wiederum beide Kurven I, II derart ausgeführt, dass sich konvex gewölbte Freiformoptiken 17 ergeben.

Die Führungskurven I, II sind allerdings nicht zwingend für alle Freiformoptiken identisch, sondern können insbesondere in Querrichtung des optischen Elements 10 variieren. Diese Variation der zweiten Führungskurven II führt letztendlich zu der gewünschten asymmetrischen Lichtverteilung, durch die die oben erwähnte Beleuchtung des Wandbereichs mit gleichmäßiger Helligkeit erzielt wird. Die ersten Führungskurven I hingegen führen dazu, dass das abgegebene Licht in Längsrichtung der Leuchte 100 verteilt wird, also der an der Wand beleuchtete Bereich sich über eine größere Länge hinweg erstreckt, als die Leuchte selbst lang ist. Hier ist keine Asymmetrie hinsichtlich der Lichtabgabe erforderlich, weshalb diese Führungskurven I in einfacher Weise für alle Freiformoptiken 18 identisch sein können, auch wenn ggf. bspw. im Randbereich eine leichte Anpassung erfolgen könnte.

Eine Weiterbildung des erfindungsgemäßen Konzepts kann ferner darin bestehen, dass im Lichtaustrittsbereich der Optik spezielle optische Folien vorgesehen sind, welche dazu dienen, die sog. chromatischen Aberrationen zu eliminieren. Insbesondere im Randbereich des zu beleuchtenden Bereichs auftretende Farbvariationen können hierdurch vermieden werden.

Letztendlich führt also das Zusammenwirken der verschiedenen konvex gekrümmten Flächen des optischen Elements mit den Freiformoptiken an der Lichtaustrittsfläche dazu, dass in sehr effizienter Weise die erforderliche asymmetrische Lichtverteilung erzielt werden kann. Die erfindungsgemäße Lösung zeichnet sich dabei insbesondere auch dadurch aus, dass das optische Element mit einer sehr geringen Bauhöhe realisiert werden kann, was dann letztendlich auch für die Bauhöhe bzw. die Abmessungen der Leuchte insgesamt gilt. Ferner liegt hier eine sehr effiziente Lichtlenkung vor, wobei herstellungsbedingt nur geringe Toleranzen vorliegen, was zu einer sehr großen Reproduzierbarkeit bei der Lichtbeeinflussung führt. Damit kann also mit Hilfe des erfindungsgemäßen optischen Elements insbesondere ein Wallwasher realisiert werden, der eine Beleuchtung eines Flächenbereichs mit sehr hoher Qualität ermöglicht.

## Patentansprüche

1. Optisches Element (10) zur Beeinflussung der Lichtabgabe einer länglichen Lichtquelle, insbesondere einer oder mehrerer länglicher LED-Platinen (50),
wobei das optische Element (10) sich in einer Längsrichtung erstreckt und im Querschnitt etwa trapezartig ausgebildet ist mit
einem der Lichtquelle zugewandten Lichteintrittsbereich (11), der eine Ausnehmung (12) mit einer gekrümmten Bodenfläche (13) aufweist,
einer dem Lichteintrittsbereich (11) gegenüberliegenden Lichtabstrahlfläche (15), welche eine gekrümmte Grundform (16) aufweist, der linsenartige Freiformoptiken (17) überlagert sind, sowie
zwei sich von dem Lichteintrittsbereich (11) zu der Lichtabstrahlfläche (15) erstreckenden, ebenfalls gekrümmten Seitenflächen (21, 22).
wobei die Bodenfläche (13), die Grundform (16) der Lichtabstrahlfläche (15) und die beiden Seitenflächen (21, 22) jeweils konvex gekrümmt sind und
wobei die Bodenfläche (13), die Grundform (16) der Lichtabstrahlfläche (15) und die beiden Seitenflächen (21, 22) jeweils Kurven folgen, die durch Polynome dritter oder höherer Ordnung beschreibbar sind.

2. Optisches Element (10) nach Anspruch 1,
**dadurch gekennzeichnet,**
**dass** Kurven durch folgende Funktionen beschreibbar sind:
für eine erste Seitenfläche (21): y = A₁x³ + B₁x² + C₁x + D₁
für die Bodenfläche (13): y = A₂x³ - B₂x² + C₂x + D₂
für die zweite Seitenfläche (22): y = A₃x³ - B₃x² - C₃x + D₃
für die Grundform (16): y = A₄x³ + B₄x² + C₄x - D4
wobei die Parameter Aₙ, Bₙ, Cₙ und Dₙ ungleich 0 sind.

3. Optisches Element (10) nach einem der vorherigen Ansprüche,
**dadurch gekennzeichnet,**
die linsenartigen Freiformoptiken (17) matrixartig auf der Lichtaustrittsfläche (15) angeordnet sind.

4. Optisches Element (10) nach Anspruch 3,
**dadurch gekennzeichnet,**
**dass** jedes linsenartige Element (17) konvex gewölbt ist und die Wölbung durch zwei aufeinander senkrecht stehende Führungskurven (I, II) beschreibbar ist.

5. Optisches Element (10) nach Anspruch 4,
**dadurch gekennzeichnet,**
**dass** eine erste Führungskurve (I) in Längsrichtung des optischen Elements (10) und eine zweite Führungskurve (II) senkrecht hierzu ausgerichtet ist.

6. Optisches Element (10) nach Anspruch 5,
**dadurch gekennzeichnet,**
**dass** die ersten Führungskurven (I) für alle linsenartigen Freiformoptiken (17) im Wesentlichen identisch sind.

7. Optisches Element (10) nach einem der vorherigen Ansprüche,
**dadurch gekennzeichnet,**
**dass** dieses - abgesehen von den linsenartigen Freiformoptiken (17) - in Längsrichtung einen im Wesentlichen unveränderlichen Querschnitt aufweist.

8. Optisches Element (10) nach einem der vorherigen Ansprüche,
**dadurch gekennzeichnet,**
**dass** dieses aus Glas, PMMA, PC oder Silikon besteht.

9. Leuchte (100), insbesondere Wallwasher, mit einem optischen Element (10) nach einem der vorherigen Ansprüche sowie einer dem optischen Element (10) zugeordneten länglichen Lichtquelle.

10. Leuchte (100) nach Anspruch 9,
**dadurch gekennzeichnet,**
**dass** die Lichtquelle durch eine oder mehrere LED-Platinen (50) gebildet ist.

## Claims

1. Optical element (10) for influencing the light output of an elongated light source, in particular one or more elongated LED boards (50),
wherein the optical element (10) extends in a longitudinal direction and is approximately trapezoidal in cross-section with
- a light entry region (11) facing the light source, which has a recess (12) with a curved bottom surface (13),
- a light emission surface (15) opposite the light entry region (11), which has a curved basic shape (16) that is superimposed on the lens-like free-form optics (17), as well as
- two side surfaces (21, 22), also curved, extending from the light entry region (11) to the light emission surface (15).
wherein the bottom surface (13), the basic shape (16) of the light emitting surface (15) and the two side surfaces (21, 22) are each convexly curved, and
wherein the bottom surface (13), the basic shape (16) of the light emitting surface (15) and the two side surfaces (21, 22) each follow curves that may be described by third or higher order polynomials.

2. Optical element (10) according to claim 1,
**characterized in that**
that the curves may be described by the following functions:
- for a first side surface (21): y = A₁x³ + B₁x² + C₁x + D₁
- for the bottom surface (13): y = A₂x³ + B₂x² + C₂x + D₂
- for the second side surface (22): A₃x³ + B₃x² + C₃x + D₃
- for the basic form (16): y = A₄x³ + B₄x² + C₄x + D₄
wherein the parameters Aₙ, Bₙ, Cₙ and Dₙ are not equal to 0.

3. Optical element (10) according to one of the preceding claims,
**characterized in that**
the lens-like free-form optics (17) are arranged in a matrix-like manner on the light emitting surface (15).

4. Optical element (10) according to claim 3,
**characterized in that**
**in that** each lens-like free-form optics (17) is convexly curved and the curvature may be described by two mutually perpendicular guide curves (I, II).

5. Optical element (10) according to claim 4,
**characterized in that**
a first guide curve (I) is aligned in the longitudinal direction of the optical element (10) and a second guide curve (II) is perpendicular thereto.

6. Optical element (10) according to claim 5,
**characterized in that**
the first guide curves (I) are substantially identical for all the lens-like free-form optics (17).

7. Optical element (10) according to one of the preceding claims,
**characterized in that**
it - apart from the lens-like free-form optics (17) - has a substantially invariable cross-section in the longitudinal direction.

8. Optical element (10) according to one of the preceding claims,
**characterized in that**
it consists of glass, PMMA, PC or silicone.

9. Luminaire (100), in particular a wallwasher, with an optical element (10) according to one of the preceding claims as well as an elongated light source associated with the optical element (10).

10. Luminaire (100) according to claim 9,
**characterized in that**
the light source is formed by one or more LED boards (50).

## Revendications

1. Élément optique (10) pour le contrôle de l'émission de lumière d'une source de lumière allongée, plus particulièrement d'une ou de plusieurs platines à LED allongées (50), l'élément optique (10) s'étendant dans une direction longitudinale et présente une section transversale approximativement trapézoïdale avec
une zone d'entrée de lumière (11) orientée vers la source de lumière, qui comprend une cavité (12) avec une surface de fond incurvée (13),
une surface d'émission de lumière (15) opposée à la zone d'entrée de lumière (11), qui présente une forme de base incurvée (16), sur laquelle sont superposées des optiques à formes libres de type lentilles (17), ainsi que
deux surfaces latérales (21, 22), également incurvées, s'étendant de la zone d'entrée de lumière (11) vers la surface d'émission de lumière (15),
la surface de fond (13), la forme de base (16) de la surface d'émission de lumière (15) et les deux surfaces latérales (21, 22) étant incurvées chacune de manière convexe et
la surface de fond (13), la forme de base (16) de la surface d'émission de lumière (15) et les deux surfaces latérales (21, 22) suivant chacune des courbes qui peuvent être décrites par des polynômes de troisième ordre ou d'un ordre supérieur.

2. Élément optique (10) selon la revendication 1,
**caractérisé en ce que**
les courbes peuvent être décrites par les fonctions suivantes :
pour une première surface latérale (21) : y = A₁x³ + B₁x² + C₁x + D₁
pour la surface de fond (13) : y = A₂x³ + B₂x² + C₂x + D₂
pour la deuxième surface latérale (22) : y = A₃x³ - B₃x² - C₃x + D₃
pour la forme de base (16) : y = A₄x³ + B₄x² + C₄x -D₄
les paramètres Aₙ, Bₙ, Cₙ et Dₙ étant différents de 0.

3. Élément optique (10) selon l'une des revendications précédentes,
**caractérisé en ce que**
les optiques à formes libres de type lentilles (17) sont disposées de manière matricielle sur la surface de sortie de lumière (15).

4. Élément optique (10) selon la revendication 3,
**caractérisé en ce que**
chaque élément de type lentille (17) est courbé de manière convexe et la courbure peut être décrite par deux courbes de guidage (I, II) perpendiculaires entre elles.

5. Élément optique (10) selon la revendication 4,
**caractérisé en ce que**
une première courbe de guidage (I) est orientée dans la direction longitudinale de l'élément optique (10) et une deuxième courbe de guidage (II) est orientée perpendiculairement à celle-ci.

6. Élément optique (10) selon la revendication 5,
**caractérisé en ce que**
les premières courbes de guidage (I) sont globalement identiques pour toutes les optiques à formes libres de type lentilles (17).

7. Élément optique (10) selon l'une des revendications précédentes,
**caractérisé en ce que**
celui-ci, à l'exception des optiques à formes libres de type lentilles (17), présente dans la direction longitudinale une section globalement invariable.

8. Élément optique (10) selon l'une des revendications précédentes,
**caractérisé en ce que**
celui-ci est constitué de verre, de PMMA, de PC ou de silicone.

9. Luminaire (100), plus particulièrement lèche-mur, avec un élément optique (10) selon l'une des revendications précédentes ainsi qu'une source de lumière allongée correspondant à l'élément optique (10).

10. Luminaire (100) selon la revendication 9,
**caractérisé en ce que**
la source de lumière est constituée d'une ou de plusieurs platines à LED (50).
